# EUROPÄISCHE PATENTSCHRIFT

(11) **EP 3 291 396 B1**
(45) Veröffentlichungstag und Bekanntmachung des Hinweises auf die Patenterteilung: **29.07.2020**
(21) Anmeldenummer: 17198535.1
(22) Anmeldetag: 03.04.2014
(51) Int. Cl.: H02G 5/02, H02G 3/22, H02G 3/32

(54) **MODULARES SYSTEM FUER ELEKTRISCHER LEITER**
MODULAR SYSTEM FOR ELECTRICAL CONDUCTOR
SYSTÈME MODULAIRE POUR CONDUCTEUR ÉLECTRIQUE

(30) Priorität: 05.04.2013 DE 102013103441
(43) Veröffentlichungstag der Anmeldung: 07.03.2018
(62) Teilanmeldung aus: 14722119.6
(73) Patentinhaber: Eaton Intelligent Power Limited, Dublin 4 (IE)
(72) Erfinder: WEIGL, Franz, 3961 Waldenstein (AT)
(74) Vertreter: Eaton IP Group EMEA

(56) Entgegenhaltungen:
- WO-A1-2008/003630
- FR-A- 1 544 774
- US-A- 2 936 331
- US-A- 3 467 766

## Beschreibung

### TECHNISCHES GEBIET

Die Erfindung betrifft ein modulares System für das Halten mehrerer elektrischer Leiter, umfassend mehrere elektrisch isolierende Halterungen mit mehreren voneinander beabstandeten Durchgangslöchern zum Durchführen der genannten elektrischen Leiter.

### STAND DER TECHNIK

Ein modulares System beziehungsweise Halterungen der genannten Art sind aus dem Stand der Technik grundsätzlich bekannt. Beispielsweise werden solche Systeme respektive Halterungen für die Führung elektrischer Leiter innerhalb eines Schaltschranks verwendet. Aufgrund der vergleichsweise hohen Stromstärken, die in den Leitern auftreten können, entstehen zwischen Leitern unterschiedlicher Polarität, zwischen unterschiedliche Phasen oder auch zwischen einer Phase und einem Nullleiter erhebliche elektromagnetische Kräfte, die von den genannten Halterungen aufgenommen werden müssen. Diese besteht daher aus einem Kunststoff, dessen elektrische Isolationseigenschaften mit den mechanischen Anforderungen in Einklang gebracht werden müssen. Dies bedeutet in aller Regel, dass die Isolationseigenschaften solcher Halterungen schlechter sind, als sie bei mechanisch wenig oder unbelasteten Halterungen sein könnten.

Die US 3,467,766 offenbart dazu auch eine Sammelschienen-Tragstruktur für eine oder mehrere Hochspannungs-Sammelschienen mit einem horizontal angeordneten isolierenden Verbindungselement, das an der Hochspannungs-Sammelschiene befestigt ist und dazu dient, diese in Betriebsposition vertikal abzustützen.

Die WO 2008/003630 A1 betrifft weiterhin ein Isolierelement für Stromschienen in Schränken für Niederspannungsverteilern. Das Isolierelement erstreckt sich entlang einer Längsachse zwischen zwei quer zu dieser Achse verlaufenden Endflächen und weist eine Vielzahl von Seitenflächen auf, die sich zwischen den Endflächen in Richtung der Längsachse erstrecken. Mindestens eine erste und eine zweite dieser Seitenflächen sind mit Längsnuten versehen, wobei die Längsnuten auf der ersten Seitenfläche und die Längsnuten auf der zweiten Seitenfläche unterschiedlich lang sind.

Die FR1544774A offenbart schließlich eine isolierende Stütze für parallele elektrische Sammelschienen mit Isolierplatten, die senkrecht zur Längsrichtung der Sammelschienen ausgerichtet sind, wobei jeder Sammelschiene eine separate, rechteckige Isolierplatte zugeordnet ist. Darüber hinaus wird ein Tragelement zum Tragen einer Vielzahl dieser Isolierplatten offenbart.

### OFFENBARUNG DER ERFINDUNG

Eine Aufgabe der Erfindung ist es nun, ein verbessertes modulares System für das Halten mehrerer elektrischer Leiter anzugeben. Insbesondere soll das Kriechstromverhalten verbessert werden.

Die Aufgabe der Erfindung wird mit einem modularen System gemäß Anspruch 1 gelöst.

Die mechanischen Anforderungen, das heißt die Aufnahme von Kräften zwischen den elektrischen Leitern wird bei dem vorgeschlagenen System im Wesentlichen von den eigentlichen Halterungen erfüllt, wohingegen die Isolation zu einer Grundfläche hin, an der das modulare System befestigt werden kann, durch die Grundplatte bewerkstelligt wird. Dadurch dass diese mechanisch kaum belastet wird, kann das Material für die Grundplatte fast ausschließlich hinsichtlich der elektrischen Isolationseigenschaften ausgewählt werden. Dadurch kann die Kriechstromfestigkeit gegenüber dem Stand der Technik bei gleichen Abmessungen des Haltesystems verbessert, beziehungsweise das System bei im Hinblick auf den Stand der Technik gleicher Kriechstromfestigkeit verkleinert werden. Bei den elektrischen Leitern kann es sich beispielsweise um Stromschienen ("bus bars") handeln. Mit Hilfe der sich über mehrere Halterungen erstreckende Deckplatte können zudem mehrere Halterungen respektive Grundplatten aneinander gereiht und zu einem in sich geschlossenen Verbund zusammengefügt werden. Günstig ist es dabei, wenn innerhalb einer Halterung Leiter geführt werden, zwischen denen relativ hohe Kräfte auftreten, sodass diese innerhalb einer Halterung aufgenommen werden können.

Als Werkstoff für die Halterungen und die Grundplatte kommen beispielsweise Kunststoff, Keramik und/oder Glas in Frage. Insbesondere ist auch denkbar, die Halterungen und die Grundplatte aus verschiedenen Werkstoffarten herzustellen. Beispielsweise können die Halterungen aus Kunststoff (insbesondere aus faserverstärktem Kunststoff) bestehen, wohingegen die Grundplatte aus Keramik oder Glas gefertigt ist. Glas und Keramik besitzen hervorragende Isolationseigenschaften, wohingegen Kunststoff neben seinen Isolationseigenschaften auch vorteilhafte mechanische Eigenschaften aufweist. Selbstverständlich können für die Halterungen und die Grundplatte auch unterschiedliche Kunststoffe eingesetzt werden.

Weitere vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn die Deckplatte und/oder die ersten und/oder zweiten Verbindungsmittel aus einem Isolator gefertigt sind. Auf diese Weise wird die Bildung einer Stromschleife um die elektrischen Leiter vermieden, wenn das modulare System auf einer metallischen Grundfläche befestigt wird. Unerwünschte induzierte Kreisströme können so vermieden werden. Wie für die Halterungen und die Grundplatte kommen beispielsweise Kunststoff, Keramik oder Glas als Werkstoff für die Deckplatte und/oder die ersten und/oder zweiten Verbindungsmittel in Frage. Die Deckplatte und die Verbindungsmittel können wieder aus unterschiedlichen Werkstoffen gefertigt sein. Beispielsweise kann die Deckplatte aus Keramik oder Glas bestehen, wohingegen die Verbindungsmittel aus Kunststoff (insbesondere aus faserverstärktem Kunststoff) gefertigt sind.

Günstig ist es, wenn die ersten und/oder zweiten Verbindungsmittel als Schrauben ausgebildet sind. Dadurch kann das modulare System mit leicht verfügbaren und erprobten Mitteln zu einem in sich geschlossenen jedoch lösbaren Verbund zusammengefügt werden.

Günstig ist es, wenn die Halterungen, die Grundplatte und gegebenenfalls die Deckplatte deckungsgleiche Durchgangslöcher aufweisen. Auf diese Weise kann das modulare System gleichzeitig zu einem in sich geschlossenen Verbund zusammengefügt und auch auf einer Grundfläche befestigt werden. Beispielsweise können Schrauben durch die Durchgangslöcher durchgeführt sein.

Günstig ist es, wenn sich die Durchgangslöcher für die elektrischen Leiter in deren Längsrichtung von beiden Seiten zur Mitte hin verjüngen. Das heißt mit anderen Worten, dass der Querschnitt der Durchgangslöcher in deren Längsrichtung von beiden Seiten zur Mitte hin kleiner wird. Auf diese Weise wird eine Bewegung, das heißt Drehung um eine quer zur Lochachse stehende Drehachse, der elektrischen Leiter in den Durchgangslöchern ermöglicht, ohne dass es zu einer punkt- beziehungsweise linienförmigen Belastung an den Außenkanten der Durchgangslöcher kommt. Die auftretenden Kräfte werden auf diese Weise besser innerhalb der Halterung abgeleitet. Beispielsweise kann die genannte Bewegung der elektrischen Leiter durch elektromagnetische Kräfte hervorgerufen werden oder aber auch, wenn die elektrischen Leiter schon bei der Montage der Halterung in derselben verkantet werden.

An dieser Stelle wird angemerkt, dass die genannten Maßnahmen auch unabhängig von den weiter oben beschriebenen Maßnahmen die Basis einer unabhängigen Erfindung bilden können. Auf diese Weise entsteht eine Halterung für mehrere elektrische Leiter aus einem elektrisch isolierenden Material mit mehreren voneinander beabstandeten Durchgangslöchern zum Durchführen der genannten elektrischen Leiter, wobei sich die Durchgangslöcher für die elektrischen Leiter in deren Längsrichtung von beiden Seiten zur Mitte hin verjüngen.

Günstig ist es, wenn die Durchgangslöcher im Mittenbereich einen geraden sich verjüngenden Abschnitt aufweisen. Im Falle eines kreisförmigen Lochquerschnitts ergibt sich in der Mitte somit ein Schnitt zweier Kegel(stümpfe), im Falle eines quadratischen Lochquerschnitts ein Schnitt zweier Pyramiden(stümpfe)

Günstig ist es aber auch, wenn die Durchgangslöcher auf wenigstens 60% deren Länge in Längsrichtung bombiert sind, da dann eine gute Beweglichkeit des elektrischen Leiters im Durchgangsloch beziehungsweise die Kraftübertragung zwischen den beiden ermöglicht wird.

Besonders vorteilhaft ist es, wenn die Durchgangslöcher auf deren gesamten Länge in Längsrichtung bombiert sind. Dadurch wird die Beweglichkeit des elektrischen Leiters im Durchgangsloch beziehungsweise die Kraftübertragung zwischen den beiden noch weiter verbessert.

Günstig ist es weiterhin, wenn die Durchgangslöcher einen rechteckigen Querschnitt aufweisen. Dadurch kann die Aneinanderreihung von Stromleitern besonders kompakt erfolgen.

Vorteilhaft ist es darüber hinaus, wenn eine Halterung integrierte Mittel zum Verbinden einer weiteren Halterung oberhalb, unterhalb oder neben der erstgenannten Halterung umfasst. Beispielsweise können diese als Verbindungsrippen oder angeformte Spreiznieten ausgebildet sein. Solcherart wird das Stapeln respektive das Aneinanderreihen mehrerer Halterungen erleichtert.

An dieser Stelle wird angemerkt, dass die genannten Maßnahmen auch unabhängig von den weiter oben beschriebenen Maßnahmen die Basis einer unabhängigen Erfindung bilden können. Auf diese Weise entsteht eine Halterung für mehrere elektrische Leiter aus einem elektrisch isolierenden Material mit mehreren voneinander beabstandeten Durchgangslöchern zum Durchführen der genannten elektrischen Leiter, wobei die Halterung integrierte Mittel zum Verbinden einer weiteren Halterung oberhalb, unterhalb oder neben der erstgenannten Halterung umfasst.

Besonders vorteilhaft ist es auch, wenn eine Halterung ungeteilt ist und mehrere Leiter unterschiedlicher Polarität durch die Halterung des modularen Systems geführt sind. Auf diese Weise werden Kräfte zwischen den elektrischen Leitern (beispielweise elektromagnetisch hervorgerufene Kräfte) innerhalb der Halterung abgeführt. An die Halterung angrenzende Bauteile werden dagegen nicht oder nur kaum belastet, wodurch diese freier gestaltet werden können.

An dieser Stelle wird angemerkt, dass die genannten Maßnahmen auch unabhängig von den weiter oben beschriebenen Maßnahmen die Basis einer unabhängigen Erfindung bilden können. Auf diese Weise entsteht eine Anordnung, umfassend eine Halterung aus einem elektrisch isolierenden Material mit mehreren voneinander beabstandeten Durchgangslöchern und mehrere durch die Durchgangslöcher geführte elektrische Leiter, wobei die Halterung ungeteilt ist und mehrere Leiter unterschiedlicher Polarität durch die Halterung geführt sind.

Schließlich ist es auch von Vorteil, wenn ein modulares System respektive eine Halterung und mehrere durch die Durchgangslöcher geführte elektrische Leiter in einen Schaltschrank eingebaut sind, da hier die zuvor erwähnten Vorteile besonders zu Tage treten.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: ein auf einem Tragprofil befestigtes beispielhaftes modulares System in Schrägansicht;
- Fig. 2: ein beispielhaftes modulares System in Explosionsdarstellung;
- Fig. 3: ein beispielhaftes modulares System in Seitenansicht und
- Fig. 4: einen Querschnitt durch eine Halterung des modularen Systems.

### DETAILIERTE BESCHREIBUNG DER ERFINDUNG

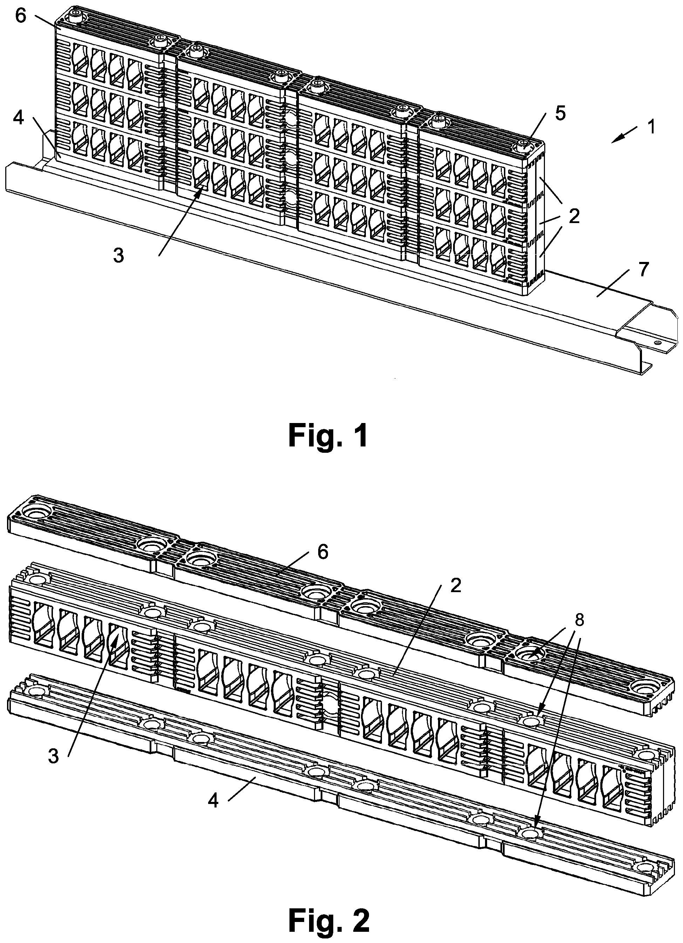

Fig. 1 zeigt ein erstes Beispiel für ein modulares System 1 für das Halten mehrerer elektrischer Leiter. Das System 1 umfasst drei elektrisch isolierende Halterungen 2 mit jeweils mehreren voneinander beabstandeten Durchgangslöchern 3 zum Durchführen der genannten elektrischen Leiter. Weiterhin umfasst das System eine Grundplatte 4, welche aus einem Material besteht, das bessere Isolationseigenschaften aufweist als die Halterungen 2 sowie erste Mittel 5 zum Verbinden der Halterungen 2 und der Grundplatte 4, welche in diesem Fall als Schrauben ausgebildet sind. Denkbar wäre aber beispielsweise auch, dass die Verbindungsmittel 5 als Nieten , insbesondere als Spreiznieten, ausgebildet sind. Diese Spreiznieten können direkt an die Halterungen 2 respektive an die Grundplatte 4 angeformt sein.

Das modulare System 1 umfasst weiterhin eine Deckplatte 6. In der Fig. 1 sind die Halterungen 2 ausschließlich übereinander gestapelt. Erfindungsgemäß sind diese aber seitlich aneinander gereiht, und die Deckplatte 6 erstreckt sich über mehrere Halterungen 2. Das heißt die Deckplatte 6 ist länger als eine Halterung 2. Dasselbe gilt auch für die Grundplatte 4.

In der in Fig. 1 dargestellten Anordnung sind die Schrauben 5 zum Verbinden der Halterungen 2, der Grundplatte 4 und der Deckplatte 6 ausgebildet. Konkret weisen die Halterungen 2, die Grundplatte 4 und die Deckplatte 6 deckungsgleiche Durchgangslöcher 8 auf (siehe auch Fig. 2), durch welche die Schrauben 5 gesteckt werden können und mit deren Hilfe das modulare System 1 nicht nur zu einem festen Verbund zusammengefügt, sondern auch auf einer Montagefläche montiert werden kann. In der Fig. 1 ist die Montagefläche durch die Oberseite eines Tragprofils 7 gebildet, das zum Beispiel Teil eines Schaltschranks sein kann.

Die Durchgangslöcher 8 sind für das modulare System 1 aber keineswegs zwingend. Denkbar wäre auch, dass neben den ersten Verbindungsmitteln zum Verbinden der Halterungen 2 und der Grundplatte 4 noch zweite Verbindungsmittel zum Verbinden der Halterungen 2 und der Deckplatte 6 vorgesehen sind. Diese können ebenfalls als Spreiznieten ausgebildet sein, die vorteilhaft direkt an die Halterung 2 respektive die Deckplatte 6 angeformt sind.

Vorzugsweise sind die Deckplatte 6 und/oder die Verbindungsmittel 5 aus einem Isolator gefertigt. Auf diese Weise wird die Bildung einer Stromschleife um die elektrischen Leiter vermieden, wenn das modulare System 1 auf einer metallischen Grundfläche befestigt wird, das heißt, wenn das Halteprofil 7 der Fig. 1 aus Metall besteht. Unerwünschte induzierte Ströme können so vermieden werden.

Wie die Halterungen 2 und die Grundplatte 4 können auch die Deckplatte 6 und/oder die Verbindungsmittel 5 aus einem elektrisch isolierenden Kunststoff hergestellt sein. Denkbar wäre auch der Einsatz anderer isolierender Werkstoffe, wie zum Beispiel von Keramik oder Glas. Die Halterungen 2, die Grundplatte 4, die Deckplatte 6 und die Verbindungsmittel 5 können auch aus unterschiedlichen Materialien hergestellt sein. Beispielsweise können die Halterungen 2 und die Verbindungsmittel 5 aus Kunststoff bestehen, wohingegen die Grundplatte 4 und die Deckplatte 6 aus Glas oder Keramik gefertigt sind. Die Halterungen 2, die Grundplatte 4, die Deckplatte 6 und die Verbindungsmittel 5 können aber aus unterschiedlichen Kunststoffen hergestellt sein.

Als Kunststoffe können generell Thermoplaste, Duroplaste oder Elastomere eingesetzt werden. Beispielsweise können Polyethylen (PE), Polypropylen (PP), Polyvinylchlorid (PVC), Polystyrol (PS), Polyurethan (PU), Polyethylenterephthalat (PET), Polycarbonat (PC), Polyamid (PA) oder auch Silikon eingesetzt werden. Insbesondere ist auch der Einsatz faserverstärkter Kunststoffe (oder auch faserverstärkter Keramik) denkbar, um die mechanischen Eigenschaften zu verbessern. Im Speziellen ist dies für die mechanisch vergleichsweise stark belasteten Halterungen 2 von Vorteil.

Die Fig. 2 zeigt ein modulares System 1 zur Verdeutlichung nochmals in Explosionsdarstellung (allerdings ohne Schrauben 5). Gut zu erkennen sind die deckungsgleichen Durchgangslöcher 8.

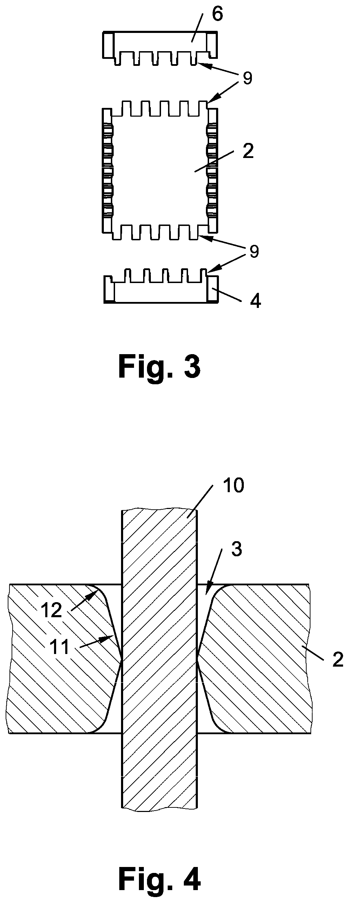

Die Fig. 3 zeigt ein beispielhaftes modulares System 1 nun in Seitenansicht. Gut zu erkennen sind die zueinander versetzten Rippen 9, die als Verbindungsmittel zwischen Halterungen 2, zu einer Grundplatte 4 oder einer Deckplatte 6 fungieren können. Die Rippen 9 können beispielsweise mit angeformten Spreiznieten kombiniert werden oder können selbst eine Schnappverbindung oder eine Schwalbenschwanzverbindung bilden, sodass die Einzelteile 2, 4, 6 des modularen Systems 1 lediglich zusammengesteckt beziehungsweise zusammengedrückt werden müssen.

In der Fig. 3 sind die Rippen 9 zum Stapeln der Einzelteile 2, 4, 6 des modularen Systems 1 ausgebildet. Sinngemäß können diese alternativ oder zusätzlich auch seitlich angeordnet sein, um das Aneinanderreihen von Halterungen 2, Grundplatten 4 und Deckplatten 6 zu ermöglichen. Auch hier können die Rippen 9 eine Schnappverbindung oder eine Schwalbenschwanzverbindung bilden beziehungsweise mit Spreiznieten kombiniert werden.

Fig. 4 zeigt nun ein Detail eines Querschnitts durch eine Halterung 2, konkret ein Durchgangsloch 3, durch das ein elektrischer Leiter 10 gesteckt ist. Bei dieser Ausführungsform verjüngt sich ein Durchgangsloch 3 in dessen Längsrichtung von beiden Seiten zur Mitte hin. Das heißt mit anderen Worten, dass der (beispielsweise rechteckförmige) Querschnitt des Durchgangslochs 3 in dessen Längsrichtung von beiden Seiten zur Mitte hin kleiner wird. Auf diese Weise wird eine Bewegung des elektrischen Leiters 10 im Durchgangsloch 3 ermöglicht, ohne dass es zu einer punkt- beziehungsweise linienförmigen Belastung an den Außenkanten des Durchgangslochs 3 kommt. Die auftretenden Kräfte können auf diese Weise innerhalb der Halterung 2 besser abgeleitet werden. Beispielsweise kann die genannte Bewegung des elektrischen Leiters 10 durch eine auf ihn wirkende elektromagnetische Kraft hervorgerufen werden. Denkbar wäre beispielsweise aber auch, dass dieser schon verkantet in die Halterung 2 eingebaut wird.

Konkret weist das in der Fig. 4 dargestellte Durchgangsloch 3 im Mittenbereich gerade, sich verjüngenden Abschnitte 11 auf, wohingegen die Außenkanten des Durchgangslochs 3 durch Rundungen 12 begrenzt sind. Denkbar wäre aber auch, dass ein Durchgangsloch 3 in einem größeren Bereich bombiert ist, das heißt eine gekrümmte Oberfläche aufweist. Vorteilhaft ist das Durchgangsloch 3 auf wenigstens 60% dessen Länge, noch besser überhaupt auf ganzer Länge, bombiert.

Generell ist es von Vorteil, wenn die Halterung 2 ungeteilt ist und mehrere Leiter 10 unterschiedlicher Polarität durch die Halterung 2 des modularen Systems 1 geführt sind. Auf diese Weise werden Kräfte zwischen den elektrischen Leitern 10 (beispielweise elektromagnetisch hervorgerufene Kräfte) innerhalb der Halterung 2 abgeführt. An die Halterung 2 angrenzende Bauteile 4, 6 werden mechanisch dagegen nicht oder nur kaum belastet, wodurch sich umfangreichere Gestaltungsmöglichkeiten für dieselben ergeben.

In den Figuren 1 bis 2 wurden jeweils Halterungen 2 dargestellt, die je vier Gruppen mit je vier Durchgangslöchern 3 aufweisen. Dies ist für die Erfindung natürlich keine zwingende Bedingung. Selbstverständlich können auch mehr oder weniger Durchgangslöcher 3 vorgesehen und auch anders gruppiert oder ungruppiert angeordnet werden. Darüber hinaus ist es auch denkbar, dass eine Halterung 2 gekürzt werden kann, beispielsweise zwischen zwei Gruppen mit je vier Durchgangslöchern 3. Denkbar ist auch, dass kürzere Halterungen 2 durch Einlegen eines speziellen Formteils in eine Spritzgussform für die Halterung 2 hergestellt werden können.

Abschließend wird angemerkt, dass die in den Figuren 1 bis 4 dargestellten Anordnungen nicht notwendigerweise maßstäblich dargestellt sind und daher auch andere Proportionen aufweisen können. Weiterhin können die Anordnungen auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung sinngemäß an die neue Lage anzupassen.

## Patentansprüche

1. Modulares System (1) für das Halten mehrerer elektrischer Leiter (10), umfassend mehrere elektrisch isolierende Halterungen (2) mit mehreren voneinander beabstandeten Durchgangslöchern (3) zum Durchführen der genannten elektrischen Leiter (10), **gekennzeichnet durch**
- eine Grundplatte (4), welche aus einem Material besteht, das bessere Isolationseigenschaften aufweist als die Halterungen (2) und welche zur Isolation zu einer Grundfläche hin, an der das modulare System (1) befestigt werden kann, ausgebildet ist, wobei die Grundplatte sich über die mehreren seitlich aneinander gereihten Halterungen erstreckt,
- erste Mittel (5, 9) zum Verbinden der Halterungen (2) und der Grundplatte (4) und
- eine sich über die mehreren seitlich aneinander gereihten Halterungen (2) erstreckende Deckplatte (6), wobei a) zweite Mittel (5, 9) zum Verbinden der Halterungen (2) und Deckplatte (6) vorhanden sind oder b) die ersten Verbindungsmittel (5, 9) zum Verbinden der Halterungen (2), der Grundplatte (4) und der Deckplatte (6) ausgebildet sind.

2. Modulares System (1) nach Anspruch 1, **dadurch gekennzeichnet, dass** die Deckplatte (6) und/oder die ersten und/oder zweiten Verbindungsmittel (5, 9) aus einem Isolator gefertigt sind.

3. Modulares System (1) nach einem der Ansprüche 1 bis 2, **dadurch gekennzeichnet, dass** die Halterungen (2), die Grundplatte (4) und die Deckplatte (6) deckungsgleiche Durchgangslöcher (8) aufweisen.

4. Modulares System (1) nach einem der Ansprüche 1 bis 3, **dadurch gekennzeichnet, dass** sich die Durchgangslöcher (3) für die elektrischen Leiter (10) in deren Längsrichtung von beiden Seiten zur Mitte hin verjüngen.

5. Modulares System (1) nach Anspruch 4, **dadurch gekennzeichnet, dass** die Durchgangslöcher (3) im Mittenbereich einen geraden sich verjüngenden Abschnitt (11) aufweisen.

6. Modulares System (1) nach Anspruch 4 oder 5, **dadurch gekennzeichnet, dass** die Durchgangslöcher (3) auf wenigstens 60% deren Länge in Längsrichtung bombiert sind.

7. Modulares System (1) nach einem der Ansprüche 1 bis 6, **dadurch gekennzeichnet, dass** eine Halterung (2) integrierte Mittel (9) zum Verbinden einer weiteren Halterung (2) oberhalb, unterhalb oder neben der erstgenannten Halterung (2) umfasst.

8. Anordnung, umfassend ein modulares System (1) nach einem der Ansprüche 1 bis 7 und mehrere durch die Durchgangslöcher (3) geführte elektrische Leiter (10), **dadurch gekennzeichnet, dass** mehrere Leiter (10) unterschiedlicher Polarität durch je eine Halterung (2) geführt sind.

9. Schaltschrank, **gekennzeichnet, durch**
a) ein modulares System (1) nach einem der Ansprüche 1 bis 7 und mehrere durch die Durchgangslöcher (3) geführte elektrische Leiter (10) oder
b) eine Anordnung mit einem modularen System (1) nach Anspruch 8.

## Claims

1. Modular system (1) for holding a number of electric conductors (10), comprising a number of electrically insulating holders (2) with a number of through-holes (3) spaced at a distance from one another for allowing the passage of said electric conductors (10), **characterised by**
- a base plate (4), which consists of a material with better insulating properties than the holders (2), and which is configured for insulation to a base surface, on which the modular system (1) can be attached, wherein the base plate extends over the several holders lined up laterally alongside one another,
- first means (5, 9) for connecting the holders (2) and the base plate (4) and
- a cover plate (6) extending over the several holders (2) lined up laterally alongside one another wherein a) two means (5, 9) are provided for connecting the holders (2) and cover plate (6) or b) the first connecting means (5, 9) are configured for connecting the holders (2), base plate (4) and cover plate (6).

2. Modular system (1) according to claim 1, **characterised in that** the cover plate (6) and/or the first and/or second connecting means (5, 9) are made from an insulator.

3. Modular system (1) according to either of claims 1 or 2, **characterised in that** the holders (2), the base plate (4) and the cover plate (6) have congruent through-holes (8).

4. Modular system (1) according to any of claims 1 to 3, **characterised in that** the through-holes (3) for the electric conductors (10) taper longitudinally from both sides toward the centre.

5. Modular system (1) according to claim 4, **characterised in that** the through-holes (3) have a straight tapered section (11) in the central region.

6. Modular system (1) according to claim 4 or 5, **characterised in that** the through-holes (3) are cambered in the longitudinal direction on at least 60% of their length.

7. Modular system (1) according to any of claims 1 to 6, **characterised in that** a holder (2) comprises integrated means (9) for connecting a further holder (2) above, below or adjacent to the first-named holder (2).

8. Assembly, comprising a modular system (1) according to any of claims 1 to 7 and a number of electric conductors (10) guided through the through-holes (3), **characterised in that** a number of conductors (10) of different polarities are guided through each holder (2).

9. Control cabinet, **characterised by**
a) a modular system (1) according to any of claims 1 to 7 and a number of electric conductors (10) guided through the through-holes (3) or
b) an assembly having a modular system (1) according to claim 8.

## Revendications

1. Système modulaire (1) pour fixer plusieurs conducteurs électriques (10), comprenant plusieurs fixations électriquement isolantes (2) avec plusieurs trous traversants (3) à distance les uns des autres pour le passage desdits conducteurs électriques (10) mentionnés,
**caractérisé par**
- une plaque de base (4), qui est en un matériau présentant de meilleures propriétés d'isolation que les fixations (2) et qui est conçue pour l'isolation par rapport à une surface de base à laquelle le système modulaire (1) peut être fixé,
dans lequel la plaque de base s'étend sur les plusieurs fixations rangées latéralement les unes à côté des autres,
- des premiers moyens (5, 9) pour assembler les fixations (2) et la plaque de base (4) et
- une plaque de recouvrement (6) s'étendant sur les plusieurs fixations (2) rangées latéralement les unes à côté des autres,
dans lequel a) des seconds moyens (5, 9) sont présents pour assembler les fixations (2) et la plaque de recouvrement (6) ou b) les premiers moyens d'assemblage (5, 9) sont conçus pour assembler les fixations (2), la plaque de base (4) et la plaque de couverture (6).

2. Système modulaire (1) selon la revendication 1, **caractérisé en ce que** la plaque de recouvrement (6) et/ou les premiers et/ou seconds moyens d'assemblage (5, 9) sont faits à partir d'un isolant.

3. Système modulaire (1) selon l'une quelconque des revendications 1 à 2, **caractérisé en ce que** les fixations (2), la plaque de base (4) et la plaque de recouvrement (6) présentent des trous traversants (8) superposables.

4. Système modulaire (1) selon l'une quelconque des revendications 1 à 3, **caractérisé en ce que** les trous traversants (3) pour les conducteurs électriques (10) se rétrécissent dans leur sens longitudinal, des deux côtés vers le centre.

5. Système modulaire (1) selon la revendication 4, **caractérisé en ce que** les trous traversants (3) présentent dans la zone centrale une section (11) droite se rétrécissant.

6. Système modulaire (1) selon la revendication 4 ou 5, **caractérisé en ce que** les trous traversants (3) sont bombés sur au moins 60 % de leur longueur dans un sens longitudinal.

7. Système modulaire (1) selon l'une quelconque des revendications 1 à 6, **caractérisé en ce qu'**une fixation (2) comprend des moyens intégrés (9) pour assembler une fixation (2) supplémentaire au-dessus, au-dessous ou à côté de la première fixation mentionnée (2).

8. Agencement, comprenant un système modulaire (1) selon l'une quelconque des revendications 1 à 7 et plusieurs conducteurs électriques (10) guidés à travers les trous traversants (3), **caractérisé en ce que** plusieurs conducteurs (10) de polarité différente sont guidés à travers une fixation (2) à chaque fois.

9. Armoire électrique, **caractérisée par**
a) un système modulaire (1) selon l'une quelconque des revendications 1 à 7 et plusieurs conducteurs électriques (10) guidés à travers les trous traversants (3) ou
b) un agencement avec un système modulaire (1) selon la revendication 8.
